# EUROPÄISCHE PATENTSCHRIFT

(11) **EP 3 233 255 B1**
(45) Veröffentlichungstag und Bekanntmachung des Hinweises auf die Patenterteilung: **06.02.2019**
(21) Anmeldenummer: 15820824.9
(22) Anmeldetag: 14.12.2015
(51) Int. Cl.: B01F 3/04, C02F 3/20, C02F 1/50

(54) **LUFTVERTEILER ZUR BELÜFTUNG EINES WASSERVOLUMENS, LUFTVERTEILERFOLIE FÜR EINEN SOLCHEN LUFTVERTEILER SOWIE VERFAHREN ZUR HERSTELLUNG EINER SOLCHEN LUFTVERTEILERFOLIE**
AIR DISTRIBUTOR FOR THE AERATION OF A WATER VOLUME, AIR DISTRIBUTOR FOIL FOR AN AIR DISTRIBUTOR OF SAID TYPE, AND METHOD FOR PRODUCING AN AIR DISTRIBUTOR FOIL OF SAID TYPE
RÉPARTITEUR D'AIR SERVANT À AÉRER UN VOLUME D'EAU, FILM RÉPARTITEUR D'AIR DESTINÉ AUDIT RÉPARTITEUR D'AIR, ET PROCÉDÉ DE FABRICATION DUDIT RÉPARTITEUR D'AIR

(30) Priorität: 16.12.2014 DE 102014226134
(43) Veröffentlichungstag der Anmeldung: 25.10.2017
(73) Patentinhaber: Rudolf Messner Umwelttechnik AG, 91325 Adelsdorf (DE)
(72) Erfinder: GRÄSL, Martin, 97222 Rimpar (DE); MESSNER, Rudolf, 91325 Adelsdorf (DE)
(74) Vertreter: FDST Patentanwälte
(86) Internationale Anmeldenummer: PCT/EP2015/079579
(87) Internationale Veröffentlichungsnummer: WO 2016/096716

(56) Entgegenhaltungen:
- DE-A1- 3 224 177
- DE-A1- 10 235 948
- DE-A1- 19 836 291
- JP-A- 2007 117 871
- JP-A- 2014 073 468

## Beschreibung

Die Erfindung betrifft einen Luftverteiler zur Belüftung eines Wasservolumens, insbesondere zur Belüftung eines Abwassers in einem Klärbecken, wobei der Luftverteiler einen Träger und eine daran befestigte Luftverteilerfolie aus Kunststoff aufweist, in die zur feinblasigen Abgabe von Luft an das Wasservolumen eine Perforierung mit einzelnen, selbst verschließenden Luftdurchtrittsöffnungen eingebracht ist. Die Erfindung betrifft weiterhin eine solche Luftverteilerfolie sowie ein Verfahren zu deren Herstellung.

Ein derartiger Luftverteiler ist beispielsweise aus der DE 29 42 607 C2 zu entnehmen.

Derartige Luftverteiler werden insbesondere zur Belüftung von Abwasser in einem Klärbecken einer Kläranlage zur Abwasseraufbereitung in einer biologischen Reinigungsstufe einer Kläranlage eingesetzt. Über die Luftzufuhr wird dabei die biologische Klärwirkung begünstigt und beschleunigt.

Um eine effiziente biologische Reinigungswirkung zu gewährleisten ist dabei erforderlich, dass eine möglichst gleichmäßige, feinblasige Belüftung des Abwassers erreicht wird. Dies muss darüber hinaus dauerhaft über eine Betriebsdauer von typischerweise mehreren Jahren gewährleistet sein.

Die Luft zur Belüftung wird derartigen Luftverteilern von außen über Zuleitungen und Gebläse zugeführt. Ein Großteil des Energieverbrauchs einer Kläranlage geht auf diese aktive Belüftung von Klärbecken zurück. Heutzutage wird beispielsweise für die kommunale Abwasseraufbereitung etwa 20% des Energiebedarfs einer Kommune benötigt, wovon wiederum etwa 60% auf die Belüftung entfällt.

Aus energetischen Gesichtspunkten ist daher eine hohe Energieeffizienz von entscheidender Bedeutung. Hierzu ist auf der einen Seite gewünscht, dass der Druckverlust des Luftverteilers möglichst gering ist und dass dieser sich zudem über die Betriebsdauer nicht erhöht. Problematisch hierbei ist, dass sich während des Betriebs einzelne Luftdurchtrittsöffnungen zusetzen können. Dies führt zu erhöhtem Druckverlust einerseits und zum anderen zu einer inhomogenen Belüftung.

Heutzutage weisen Luftverteiler perforierte, elastische Kunststofffolien als Luftverteilerfolien auf, in die eine Vielzahl von einzelnen Luftdurchtrittsöffnungen eingebracht sind. Diese werden üblicherweise mit kleinen Messern oder Nadeln eingebracht, die geringe Abmessungen von beispielsweise lediglich 0,4 bis 2 mm aufweisen. Durch die Elastizität der Kunststofffolie sind diese quasi selbst verschlie-βend. Hierunter wird verstanden, dass in Belüftungspausen, wenn also keine aktive Luftzufuhr erfolgt, durch diesen selbst verschließenden Mechanismus verhindert ist, dass das Abwasser über die Luftdurchtrittsöffnungen in den Luftverteiler eintreten kann, was zu einer Verschmutzung des Luftverteilers und damit auch zu einer Verstopfung der einzelnen Luftdurchtrittsöffnungen führen könnte. Bei einer Luftzufuhr wölbt sich die Luftverteilerfolie auf, so dass sich die Luftdurchtrittsöffnungen öffnen oder zumindest aufweiten und Luft durch diese hindurchtritt.

Aus der DE 102 35 948 A1 ist ein z.B. als Tellerbelüfter ausgebildeter Luftverteiler mit einer perforierten Membran zu entnehmen, die zur Vermeidung der Anlagerung von Mikroorganismen mit einem Biozid wirkenden Zusatzstoff beschichtet ist oder die aus einem antimikrobiellen Werkstoff besteht.

Aus der DE 32 24 177 A1 ist eine Belüftungsvorrichtung für Wasser zu entnehmen, bei der um ein Kunststoffrohr, welches Bohrungen aufweist, zunächst ein Geflecht und anschließend ein geschlitzter Gummischlauch angebracht ist. Der Gummischlauch weist eine Außenschicht auf, die beispielsweise als ein lackartiger Anstrich ausgebildet ist und Substanzen enthält, welche eine schädliche Bakterienbeeinflussung zur Verhärtung des Schlauches ausschließen sollen.

Aus der JP 2014 073468 A ist ein Luftverteiler mit einer Membran zu entnehmen, die auf einem Träger angebracht ist. Die Membran weist dabei eine poröse obere Schicht und eine poröse untere Schicht auf, zwischen denen ein Verstärkungselement in Form eines Gewebes eingelegt ist.

In der DE 198 36 291 A1 wird ein Belüftungsschlauch zum Belüften von Wasser beschrieben, welcher durch zwei miteinander verbundene Gummistreifen unterschiedlicher Härte ausgebildet ist. In den einen, oberen Streifen wird durch ein Stanzmesser eine Perforierung eingebracht, wobei hierbei der untere, zähharte Streifen ein Widerlager bildet.

Gemäß der JP 2007 117871 A ist ein Luftverteiler mit einer hydrophilen Außenseite vorgesehen. Hierzu wird beispielsweise eine hydrophile Beschichtung aufgebracht oder es wird eine Oberflächenbehandlung mit Plasma vorgenommen oder eine raue Oberfläche ausgebildet.

Aus der DE 102 35 948 A1 ist weiterhin bei Drainagesystemen für Kläranlagen die Verwendung von antibakteriell wirkenden Zusatzstoffen zu entnehmen.

Ausgehend hiervon liegt der Erfindung die Aufgabe zugrunde, eine dauerhaft zuverlässig gleichmäßige Belüftung auch bei widrigen, insbesondere bei sich verändernden Abwasserqualitäten zu gewährleisten.

Die Aufgabe wird erfindungsgemäß gelöst durch einen Luftverteiler mit den Merkmalen des Anspruchs 1. Dieser weist einen Träger sowie eine daran befestigte Luftverteilerfolie aus Kunststoff auf, in die sich selbst verschließende Luftdurchtrittsöffnungen eingebracht sind. Zur Gewährleistung der selbst verschließenden Funktion werden diese mittels Nadeln eingebracht, die lediglich einen geringen Durchmesser im Bereich von 0,4 mm bis 1,2 mm und insbesondere im Bereich zwischen 0,6 und 1,0 mm aufweisen. Die Luftverteilerfolie ist dabei als kaschierte Folie mit einem zumindest dreilagigen Aufbau ausgebildet. Sie weist eine erste abwasserseitige, also nach außen zum Wasservolumen hin orientierte Funktionsschicht (Funktionslage)eine zweiten Schicht, die als eine elastische Dichtschicht (Dichtlage) ausgebildet ist und die sich von der Funktionsschicht unterscheidet. Die elastische Dichtschicht dient dabei zur Gewährleistung der selbst verschließenden Funktion der einzelnen Luftdurchtrittsöffnungen, weist daher eine hohe Elastizität auf. Die elastische Dichtschicht kann daher auch als eine Membranschicht angesehen werden. Als dritte Folienlage ist weiterhin eine Trägerlage ausgebildet, welche also eine Trägerschicht ausbildet. Diese weist im Vergleich zu der Dichtschicht eine geringere Elastizität auf.

In die abwasserseitige Funktionsschicht sind Substanzen mit einer funktionellen Wirkung eingebracht. Alternativ oder ergänzend bildet die Funktionsschicht eine hydrophile Oberfläche aus und ist vorzugsweise als solche hydrophil. Unter funktioneller Wirkung wird hierbei verstanden, dass die Funktionsschicht bei Kontakt mit dem zu belüftenden Wasservolumen eine zusätzliche technische Funktion ausübt und aufweist, welche die Dichtschicht beispielsweise nicht hat. Unter funktioneller Wirkung wird wahlweise oder in Kombination verstanden eine antibakterielle Wirkung, eine Resistenz gegen Inhaltsstoffe im Abwasser, eine hohe Widerstandsfähigkeit gegenüber abrasiven Stoffen im Abwasser oder auch eine Resistenz gegen spezielle Abwassereigenschaften, wie beispielsweise stark alkalische oder basische Abwässer, stark reduzierende oder oxidierende Abwässer. Die in die Funktionsschicht eingebetteten Substanzen können dabei physikalisch und/oder chemisch wirksam sein.

Unter hydrophil wird allgemein verstanden, dass die Funktionsschicht mit Wasser zumindest benetzbar ist, so dass sich auf der Oberfläche ein durchgehender Wasserfilm ausbildet und/ oder dass die Funktionsschicht eine Wasseraufnahmefähigkeit aufweist. Die Wasseraufnahmefähigkeit liegt dabei insbesondere bei 3 - 5 %.

Durch die hydrophile Eigenschaft wird ein gewünschtes feinblasiges Ausgasen begünstigt. Aufgrund des an der Oberfläche quasi gebundenen Wassers kann dieses die aus der jeweiligen Luftaustrittsöffnung austretende Luft einschnüren, so dass kleine Blasengrößen begünstigt werden.

Es wird also hierdurch ein besonders einfaches Ablösen der einzelnen Luftblasen von der abwasserseitigen Oberfläche der Luftverteilerfolie erzielt. Hierdurch wird insgesamt die Energieeffizienz verbessert.

Diese Ausgestaltung mit dem mehrschichtigen Aufbau mit einer abwasserseitigen Funktionsschicht geht dabei von der Überlegung aus, dass die Anforderungen an moderne Klärbecken und damit an die Luftverteiler immer mehr zunehmen und dass die Abwasserqualitäten je nach Anwendungsgebiet, beispielsweise industrielle Abwässer oder kommunale Abwässer, stark unterschiedliche Anforderungen an derartige Luftverteiler stellen. Die gewünschte mehrjährige, beispielsweise 10-bis 20-jährige Gebrauchsfähigkeit der Luftverteiler ist daher nicht mehr ohne weiteres gewährleistet. Insbesondere werden an die Luftverteilerfolie aufgrund dieser unterschiedlichen Abwasserqualitäten Anforderungen gestellt, die gegenläufig zu den Anforderungen für das automatische dichte Verschließen der Luftverteilerfolie sind. Um diesen unterschiedlichen Anforderungen gerecht zu werden, werden daher zumindest zwei funktional unterschiedliche Schichten für die Luftverteilerfolie eingesetzt, wobei die abwasserseitige Funktionsschicht in Wechselwirkung mit dem Abwasser tritt.

Von besonderer Bedeutung ist weiterhin die Trägerschicht, welche im Vergleich zu der Dichtschicht eine geringere Elastizität aufweist. Aufgrund der im Vergleich zu der Dichtschicht geringeren Elastizität weist die Trägerschicht daher allgemein eine höhere Steifigkeit und Formstabilität auf. Bei Luftverteilern wird im Betrieb in einem Zwischenraum zwischen dem Träger und der Luftverteilerfolie die zu verteilende Luft mit Überdruck eingebracht, so dass sie über die Luftdurchtrittsöffnung austreten kann. Dies führt auch zu einer mechanischen Belastung der Luftverteilerfolie. Insbesondere aufgrund der geforderten elastischen Eigenschaft, um die Dichtfunktion zu gewährleisten führt dies regelmäßig im Betrieb zu einem Aufwölben der Luftverteilerfolie. Ein zu starkes Aufwölben kann hierbei zu einer ungleichmäßigen Blasenbildung führen. Durch die Trägerschicht wird ein unerwünschtes zu starkes Aufwölben zuverlässig vermieden. Auch hier werden durch die Verwendung einer zusätzlichen Lage gegenläufige Anforderungen in die gemeinsame Luftverteilerfolie integriert, nämlich auf der einen Seite eine möglichst große Elastizität zur Gewährleistung der Dichtfunktion und auf der anderen Seite eine möglichst hohe Steifigkeit.

Dies ist insbesondere auch vor dem Hintergrund der Entwicklungen bei der biologischen Abwasserreinigung von besonderer Bedeutung, bei der durch spezielle Bakterienstämme eine vergleichsweise hohe Abwassertemperatur von über 40 C eingestellt wird. Die elastische Dichtschicht würde bei derartigen erhöhten Temperaturen zu stark aufwölben und es bestünde die Gefahr, dass die Elastizität und damit der Membraneffekt der Dichtschicht im Laufe der Zeit nachlässt und damit die Dichtfunktion nicht mehr dauerhaft gewährleistet ist. Die Trägerschicht ist daher insbesondere zur Stabilisierung der Dichtschicht auch bei hohen Temperaturen von über 40 C geeignet ausgebildet.

Durch die Ausgestaltung als mehrlagige, kaschierte Folie sind zudem die einzelnen Lagen der Luftverteilerfolie aneinander dauerhaft und insbesondere vollflächig befestigt. Sofern vorliegend daher von "Schichten" gesprochen wird, ist hierunter jeweils eine einzelne Lage der mehrlagigen Folie zu verstehen.

Die Verbindung der Folienlagen erfolgt beim Herstellvorgang dabei vorzugsweise kleber- und bindemittelfrei und insbesondere durch eine rein stoffschlüssige Verbindung der Materialien der einzelnen Folienlagen. Bevorzugt erfolgt die Herstellung der Luftverteilerfolie in einem Extrusionsprozess, wobei die einzelnen Folienlagen zunächst separat extrudiert und dann unmittelbar anschließend an die Extrusion zur Ausbildung einer gemeinsamen Folie im vorzugsweise noch warmen Zustand zusammengeführt und gegeneinander gepresst werden.

Zur Ausbildung der Luftverteilerfolie wird anschließend noch in diese mehrlagige, kaschierte Folie die Perforation in an sich bekannter Weise zur Ausbildung der Luftdurchtrittsöffnung eingebracht. Dies erfolgt bevorzugt durch einen Nadelvorgang, bei dem die kaschierte mehrschichtige Folie mit Hilfe von Nadeln zur Ausbildung der Luftdurchtrittsöffnungen durchstoßen wird.

Die Funktionsschicht weist zweckdienlicherweise eine strukturierte Oberfläche mit Erhebungen und Vertiefungen auf, die vorzugsweise eine Mikrostruktur bilden. Diese Struktur ist dabei derart ausgebildet, dass sie die hydrophile Eigenschaft zumindest unterstützt. Zugleich ist die Struktur derart ausgebildet, dass Ablagerungen möglichst vermieden sind. Die Erhebungen und Vertiefungen weisen beispielsweise eine Höhe oder Breite im Bereich größer 50 µm auf.

Gemäß einer bevorzugten Ausgestaltung weist die Funktionsschicht alternativ oder ergänzend zu der hydrophilen Eigenschaft auch eine antibakterielle Wirkung auf. Hierzu ist in die Funktionsschicht eine Substanz mit antibakterieller Wirkung eingebettet. Durch diese funktionelle Wirkung wird der Befall der Luftverteilerfolie mit Bakterien verhindert oder zumindest reduziert, so dass die Oberfläche der Luftverteilerfolie möglichst frei von Ablagerungen bleibt, wodurch insgesamt wiederum die Dauergebrauchsfähigkeit verbessert sowie das Zusetzen von Luftaustrittsöffnungen vermieden und damit die Energieeffizienz verbessert ist.

Zur Ausbildung der antibakteriellen Wirkung sind hierzu in die Funktionsschicht zweckdienlicherweise Metalle oder Metallverbindungen integriert. Insbesondere handelt es sich dabei um Silber oder Silberverbindungen, aber auch um Kupfer oder Kupferverbindungen. Bei diesen Metallen oder Metallverbindungen handelt es sich beispielsweise um Ionen, insbesondere Silberionen, Salze oder kolloidale Metalle, d.h. Nanometallpartikel. Neben diesen Materialien können auch weitere an sich bekannte Materialien mit antimikrobieller oder antibakterieller Wirkung eingesetzt werden. So ist beispielsweise auch die Verwendung von Titandioxid möglich.

Die Dichtschicht bildet dabei vorzugsweise die dem Abwasser abgewandte Innenschicht der Luftverteilerfolie aus, so dass sich eine Schichtfolge Dichtschicht-Trägerschicht-Funktionsschicht ergibt.

Zweckdienlicherweise weist die Trägerschicht hierzu eine höhere Härte als die Dichtschicht auf. Insbesondere weist die Trägerschicht eine Shore-A-Härte im Bereich von 85 bis 95 und insbesondere im Bereich von etwa 90 auf. Die Dichtschicht weist demgegenüber eine Shore-A-Härte im Bereich von 75 bis 85 und insbesondere im Bereich von etwa 80 auf.

Die Dichtschicht sowie die Trägerschicht sind bis auf die unterschiedliche Elastizität und Härte identisch ausgebildet. Hierunter wird verstanden, dass beide Schichten aus dem gleichen Kunststoff bestehen, insbesondere aus Polyurethan, jedoch mit unterschiedlichen Elastizitäten. In beiden Fällen wird daher für die jeweilige Schicht ein Thermoplastisches Polyurethan verwendet. Die Trägerschicht weist keine zusätzlichen Verstärkungsstoffe auf. Insgesamt ist dadurch eine homogene Schichtenfolge ausgebildet.

Die Dichtschicht und die Funktionsschicht sind ebenfalls aus dem gleichen Kunststoff, unterscheiden sich beispielsweise lediglich im Hinblick auf die in die Funktionsschicht zusätzlich eingebrachten Substanzen mit funktioneller Wirkung. Die Kunststoffmatrix, in der diese Substanzen eingebettet sind ist daher identisch mit der der Dichtschicht.

Die einzelnen Schichten der Luftverteilerfolie bestehen aus der gleichen Kunststoffart. Hierdurch ist eine zuverlässig dauerhaft wirksame flächige Verbindung zwischen den einzelnen Lagen gewährleistet, ohne dass ein Ablösen im Laufe der gewünschten mehrjährigen Betriebsdauer zu befürchten ist. Unter gleicher Kunststoffart wird hierbei verstanden, dass die einzelnen Lagen aus Kunststoffen gebildet sind, welche aus den gleichen Ausgangsstoffen bei der Polymerisation bestehen bzw. bei denen die sich im Polymer wiederholenden Grundbausteine die gleichen sind. Insbesondere wird unter gleicher Kunststoffart verstanden, dass das Material der Lagen, insbesondere die Kunststoffmatrix, identisch ist und sich lediglich im Hinblick auf die Dichte, Elastizität, Oberfläche und/oder den eingebrachten Substanzen mit der gewünschten funktionellen Wirkung unterscheidet. Sofern insoweit vorliegend von zueinander verschiedenen Lagen gesprochen wird, so ist hierunter insbesondere zu verstehen, dass sich die Lagen zumindest oder lediglich im Hinblick auf die eben genannten Eigenschaften unterscheiden.

Über unterschiedliche Herstellbedingungen entweder bei der Polymerisation der Kunststoffe selbst oder auch bei der Herstellung der Kunststoffschicht werden die einzelnen speziellen Funktionen der einzelnen Schichten eingestellt. Die unterschiedlichen Härten und damit Elastizitäten der Dichtschicht im Vergleich zur Trägerschicht werden bei der Herstellung des speziellen Kunststoffes, also bei der Polymerisation, eingestellt. Demgegenüber werden die Eigenschaften der Funktionsschicht bei der Herstellung der jeweiligen Schicht ausgebildet. Hierzu werden beispielsweise für den Extrusionsvorgang einem Kunststoff-Granulat die funktionellen Substanzen beigemischt, um die funktionelle Wirkung einzustellen.

Auch die Einstellung der hydrophilen Eigenschaft der Oberfläche der Funktionsschicht wird beim Herstellen der äußeren Funktionsschicht zumindest unterstützt, indem deren Oberfläche in geeigneter Weise modelliert wird. Hierzu ist insbesondere vorgesehen, dass der schmelzflüssige Kunststoff beispielsweise über eine Walze mit entsprechend aufgerauter Oberfläche geführt wird. Bei der Herstellung von Kunststofffolien wird auch häufig ein Trennmittel eingesetzt, welches dafür sorgt, dass der Kunststoff nicht an den Werkzeugen, beispielsweise Walzen, haften bleibt. Für die Einstellung der gewünschten Oberflächenstrukturierung wird vorzugsweise eine Zwischenlage mit der gewünschten Oberflächenstrukturierung zwischen Walze und Kunststoff eingelegt, beispielsweise ein Trennpapier. Diese Zwischenlage bildet sogleich ein Trennmittel aus. Auf weitere Trennmittel wird vorzugsweise verzichtet. Derartige Trennmittel würden der gewünschten hydrophilen Eigenschaft entgegenlaufen.

Insbesondere handelt es sich bei den einzelnen Folienlagen jeweils um Polyurethanfolienlagen. Thermoplastisches Polyurethan hat sich als besonders geeignet herausgestellt, um die unterschiedlichen Schichten mit den verschiedenen chemisch/physikalischen Funktionen einstellen zu können. Insbesondere hat sich Polyurethan für die Verwendung als elastische Dichtschicht als besonders geeignet erwiesen.

Als besonders geeignet haben sich Polyether basierte Thermoplastische Urethane erwiesen, sowohl für die Trägerschicht als auch für die Dichtschicht und die Funktionsschicht.

Alternativ zu Polyurethan-Schichten werden auch Lagen aus Silikonen oder aus EPDM (Ethylen-Propylen-Dien-Kautschuk) verwendet. Grundsätzlich können auch Schichten aus verschiedenen Kunststoffarten miteinander verbunden werden.

Der Luftverteiler ist in bevorzugter Ausgestaltung als Plattenverteiler ausgebildet, welcher als Träger eine Bodenplatte mit einem umlaufenden Rahmen aufweist, wobei zwischen dem Rahmen und der Bodenplatte die Luftverteilerfolie eingespannt ist. Weiterhin sind insbesondere bei großflächigen Plattenverteilern über die Luftverteilerfolie Haltestreben geführt. Schließlich weist der Luftverteiler noch einen Anschluss zur Zuführung von Luft auf. Dieser Anschluss ist zweckdienlicherweise in die Luftverteilerfolie integriert, beispielsweise anvulkanisiert oder in sonstiger Weise angeklebt, so dass eine Luftzuführung von der abwasserseitigen Oberseite her ermöglicht ist. Der Plattenverteiler weist dabei vorzugsweise eine Grundfläche im Bereich beispielsweise von 0,5 bis wenige qm, beispielsweise 2 bis 3 qm auf. Insbesondere weist der Plattenverteiler eine rechteckige Grundfläche mit Kantenlängen von 1 x 2 m auf.

Grundsätzlich besteht die Möglichkeit, die hier beschriebene spezielle mehrlagige Luftverteilerfolie auch in anderen Luftverteilern einzusetzen, die beispielsweise als kreisrunde Plattenverteiler oder auch als Rohrverteiler ausgebildet sind. Bei Rohrverteilern ist die Luftverteilerfolie an Außenseiten von Luftführungsrohren angeordnet.

In bevorzugter Ausgestaltung ist die Luftverteilerfolie getempert, d.h. sie wird beim Herstellen nachfolgend zur Extrusion einer zusätzlichen Wärmebehandlung unterzogen. Bei dieser wird sie entsprechend einem vorgegebenen Temperaturprofil zunächst gleichmäßig und kontinuierlich auf eine Tempertemperatur erwärmt, und auf dieser üblicherweise über einen längeren Zeitraum im Bereich beispielsweise von Stunden gehalten. Die Tempertemperatur liegt unter der Schmelz- oder Erweichungstemperatur des Kunststoffes. Ein solches Tempern begünstigt das im Betrieb angestrebte gleichmäßige Ausgasen.

Die Aufgabe wird gemäß der Erfindung weiterhin gelöst durch eine Luftverteilerfolie gemäß Anspruch 10 sowie durch ein Verfahren zum Herstellen einer solchen Luftverteilerfolie mit den Merkmalen des Anspruchs 11. Die im Hinblick auf den Luftverteiler angeführten Vorteile und bevorzugten Ausgestaltungen sind auch auf die Luftverteilerfolie sowie das Verfahren zu übertragen.

Ein Ausführungsbeispiel der Erfindung wird nachfolgend anhand der Figuren näher erläutert. Diese zeigen in teilweise vereinfachten Darstellungen:
- Fig. 1: eine Aufsicht auf einen als Plattenverteiler ausgebildeten Luftverteiler,
- Fig. 2: eine vereinfachte Querschnittsdarstellung durch den Luftverteiler gemäß Fig. 1 entlang der Schnittebene II-II sowie
- Fig. 3: eine Schnittansicht durch eine dreilagige Luftverteilerfolie.

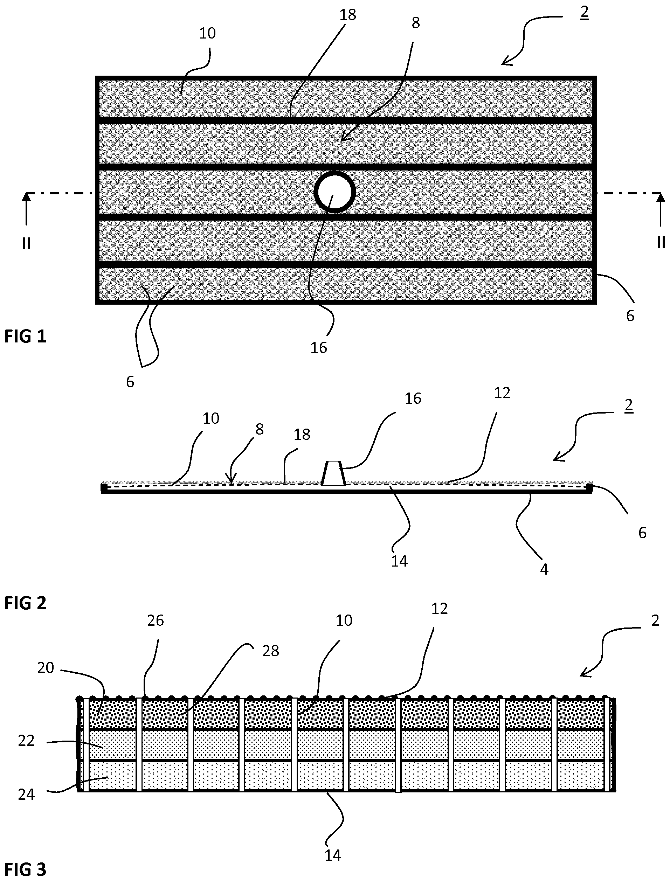

Der in den Fig.1 und 2 dargestellte Luftverteiler 2 ist als Plattenverteiler mit einer im Ausführungsbeispiel rechteckförmigen Grundfläche ausgebildet. Der Plattenverteiler weist eine Grundplatte 4 mit hoher Eigensteifigkeit auf. Umlaufend der Grundplatte ist ein Rahmen 6 angeordnet, in den eine Luftverteilerfolie 8 eingespannt ist. Bei der Luftverteilerfolie 8 handelt es sich um eine perforierte Folie mit einer Vielzahl von Luftdurchtrittsöffnungen 10. Die Luftverteilerfolie 8 weist eine abwasserseitige Oberfläche 12 sowie eine zur Grundplatte 4 orientierte Innenseite 14 auf. Etwa mittig des Luftverteilers 2 ist ein Anschluss 16 angeordnet, über den ein Luftzuführschlauch oder ein Luftzuführrohr zur Versorgung des Luftverteilers 2 mit Druckluft anschließbar ist.

Um beim Betrieb ein zu starkes Aufwölben der elastischen Luftverteilerfolie 8 zu vermeiden weist der Luftverteiler 2 im Ausführungsbeispiel weiterhin vorzugsweise Haltestreben 18 auf, die als Niederhalter wirken und mit der Grundplatte verbunden sind und oberhalb der Luftverteilerfolie 8 verlaufen. Insbesondere bei anderen Typen oder auch schmalen Varianten nach Art von Streifenbelüftern ist auf derartige Haltestreben verzichtet. Im Ausführungsbeispiel verlaufen die Haltestreben 18 in Längsrichtung. Die Grundplatte 4 sowie der Rahmen 6 bilden einen Träger für die Luftverteilerfolie 8, an dem diese befestigt ist. Die Grundplatte 4, der Rahmen 6 sowie insbesondere auch die Haltestreben 18 bestehen zweckdienlicherweise aus einem Metall, insbesondere Edelstahl. Dadurch wird eine langjährige Dauergebrauchsfähigkeit gewährleistet.

Derartige Luftverteiler 2 werden am Boden eines Klärbeckens angebracht, welches im Betrieb mit einem zu reinigenden Abwasser gefüllt ist. Über Kompressoren und über Zuführschläuche wird Luft in den Zwischenraum zwischen der Grundplatte 4 und der Luftverteilerfolie 8 eingeblasen. Diese tritt durch die Luftdurchtrittsöffnungen 10 in das darüber befindliche Abwasser aus. Im Betrieb beträgt dabei der Wasserüberstand üblicherweise mehrere Meter, beispielsweise 4 bis 5 m. Entsprechend ist ein ausreichend hoher Druck erforderlich, um die Luft in gewünschter Weise zur feinblasigen Belüftung des Abwassers durch die Luftdurchtrittsöffnungen 10 hindurchzudrücken.

Das Eindüsen von Luft dient zur Unterstützung einer biologischen Abwasserbehandlung. Spezielle Behandlungsverfahren benötigen erhöhte Abwassertemperaturen von 40°C und mehr. Dies führt zu einer starken thermischen Belastung der Luftverteilerfolie 8. Darüber hinaus wird diese auch stark durch unterschiedliche Abwasserqualitäten belastet.

Die Belüftung erfolgt üblicherweise mit Unterbrechungen, bei denen also keine Luftzufuhr erfolgt. Für derartige Unterbrechungsphasen muss gewährleistet sein, dass das Abwasser nicht in den Luftverteiler 2 eindringt. Hierzu ist die Luftverteilerfolie 8 ausreichend elastisch ausgebildet, so dass die Luftdurchtrittsöffnungen 10 selbst verschließend sind. Unterstützt wird dieser selbst verschließende Mechanismus dadurch, dass die Luftverteilerfolie sich beim Betrieb, also beim Zuführen von Luft, aufwölbt, so dass sich beim Aufwölben die Luftdurchtrittsöffnungen 10 vergrößern und umgekehrt bei fehlender Luftzuführung wieder verkleinern, so dass kein Abwasser in das Innere des Luftverteilers 2 eindringen kann.

Um die unterschiedlichen, häufig gegenläufigen Anforderungen an die Luftverteilerfolie dauerhaft zuverlässig zu gewährleisten, ist diese als eine kaschierte, mehrschichtige Folie ausgebildet, bevorzugt als eine mehrschichtige TPU-Folie, wie sie in Fig.3 dargestellt ist.

Die Luftverteilerfolie 8 weist eine obere, abwasserseitige Funktionsschicht 20, eine als Trägerschicht 22 ausgebildete mittlere Schicht sowie zur Innenseite 14 hin eine Dichtschicht 24 auf. Die einzelnen Schichten sind dabei durch einzelne Folienlagen gebildet, welche beim Herstellprozess miteinander kaschiert sind.

Die Funktionsschicht 20 hat insbesondere eine Doppelwirkung, sie ist nämlich zum einen hydrophil ausgebildet und zum anderen gleichzeitig insbesondere auch antibakteriell. Im Hinblick auf die angestrebte hydrophile Wirkung ist die Oberfläche 12 der Funktionsschicht 20 beispielsweise strukturiert ausgebildet und weist insbesondere einzelne Erhebungen 26 auf.

In die Funktionsschicht 20 sind funktionelle Substanzen 28, insbesondere Metalle, beispielsweise Metallionen, vorzugsweise Silberionen, zur Ausbildung der funktionellen Wirkung eingebracht insbesondere eingebettet. Über die funktionellen Substanzen 28 wird insbesondere die antimikrobielle Wirkung erreicht. Alternativ oder ergänzend dienen die Substanzen 28 zur Erhöhung der Abriebfestigkeit oder auch zu weiteren Resistenzen gegen spezielle Abwassereigenschaften. Für die verbesserte Abriebfestigkeit werden beispielsweise geeignete Festpartikel in die Kunststoff-Matrix der Funktionsschicht 20 eingebettet. Auch können andere chemisch wirksame Substanzen in die Funktionsschicht eingebettet werden.

Die Trägerschicht 22 unterscheidet sich von der Dichtschicht 24 vorzugsweise ausschließlich durch ihre höhere Härte und damit geringere Elastizität. Vorzugsweise weist sie ansonsten den identischen Aufbau auf. Zweckdienlicherweise weisen daher weder die Dichtschicht 24 noch die Trägerschicht 22 Einlagerungen etc., beispielsweise Verstärkungsstoffe, auf.

Die Trägerschicht 22 hat die Funktion der Eigenstabilisierung der Luftverteilerfolie 8, so dass diese sich auch bei einer hohen Temperaturbelastung nicht zu sehr aufwölbt, so dass die Dauerelastizität der Dichtschicht 24 gewährleistet ist.

Alternativ zu der dargestellten dreischichtigen Ausgestaltung ist in einer alternativen Ausgestaltung die Luftverteilerfolie 8 zweischichtig ausgebildet. Falls keine erhöhte Temperaturbelastung zu erwarten ist, kann auf die stabilisierende Wirkung der Trägerschicht 22 verzichtet werden.

Die Luftverteilerfolie 8 weist insgesamt eine Dicke typischerweise <1 mm auf. Vorzugsweise weist sie eine Dicke im Bereich zwischen 500 und 800 µm auf. Die Dicken der einzelnen Schichten 20,22,24 sind dabei beispielsweise annähernd gleich. Eine einzelne Schichtdicke liegt dabei beispielsweise zwischen 150 und 300 µm.

Die Luftdurchtrittsöffnungen 10 durchdringen alle drei Schichten 20,22,24 und sind beispielsweise zylindrisch oder auch konisch ausgebildet. Bei einer konischen Ausbildung verjüngen sich die Luftdurchtrittsöffnungen zur Dichtschicht 24 hin.

Durch den hier beschriebenen speziellen Aufbau der Luftverteilerfolie wird insgesamt ein langjähriger zuverlässiger Betrieb eines Luftverteilers auch bei widrigen Abwasserbedingungen, insbesondere erhöhten Abwassertemperaturen, erreicht.

## Patentansprüche

1. Luftverteiler (2) zur Belüftung eines Wasservolumens, insbesondere zur Belüftung eines Abwassers in einem Klärbecken, der einen Träger (4,6) und eine daran befestigte Luftverteilerfolie (8) aus Kunststoff aufweist, in die zur feinblasigen Abgabe von Luft an das Wasservolumen eine Perforierung mit einzelnen, selbst verschließenden Luftdurchtrittsöffnungen (10) eingebracht ist,
**dadurch gekennzeichnet,**
**dass** die Luftverteilerfolie (8) als eine kaschierte Folie mit zumindest drei Folienlagen jeweils aus der gleichen Kunststoffart ausgebildet ist und in die kaschierte Folie aus den zumindest drei Folienlagen die Perforierung eingebracht ist, wobei die einzelnen Folienlagen eine abwasserseitige Funktionsschicht (20), eine hierzu verschiedene elastische Dichtschicht (24) sowie eine Trägerschicht (22) mit im Vergleich zu der Dichtschicht (24) geringeren Elastizität ausbilden und wobei in die Funktionsschicht (20) Substanzen (28) mit funktioneller Wirkung integriert sind oder die Funktionsschicht (20) eine hydrophile Oberfläche (12) ausbildet und wobei durch die Dichtschicht (24) die selbst verschließende Eigenschaft der Luftdurchtrittsöffnungen (10) gewährleistet ist.

2. Luftverteiler (2) nach dem vorhergehenden Anspruch,
**dadurch gekennzeichnet,**
**dass** die Funktionsschicht (20) hydrophil ist und eine Wasseraufnahmefähigkeit aufweist.

3. Luftverteiler (2) nach einem der vorhergehenden Ansprüche,
**dadurch gekennzeichnet,**
**dass** die Funktionsschicht (20) eine strukturierte Oberfläche aufweist.

4. Luftverteiler (2) nach einem der vorhergehenden Ansprüche,
**dadurch gekennzeichnet,**
**dass** die Funktionsschicht (20) eine antibakterielle Wirkung hat und hierzu in die Funktionsschicht (20) eine Substanz (28) mit antibakterieller Wirkung eingebettet ist.

5. Luftverteiler (2) nach einem der vorhergehenden Ansprüche,
**dadurch gekennzeichnet,**
**dass** in die Funktionsschicht (20) Metalle oder Metallverbindungen integriert sind, insbesondere Silber oder Silberverbindungen.

6. Luftverteiler (2) nach einem der vorhergehenden Ansprüche,
**dadurch gekennzeichnet,**
**dass**, die Trägerschicht (22) eine Shore-A-Härte im Bereich von 85 bis 95 und die Dichtschicht (24) eine Shore-A-Härte im Bereich von 75 bis 85 aufweist.

7. Luftverteiler (2) nach einem der vorhergehenden Ansprüche,
**dadurch gekennzeichnet,**
**dass** die einzelnen Schichten (20,22,24) aus einem Polyurethan bestehen.

8. Luftverteiler (2) nach einem der vorhergehenden Ansprüche,
**dadurch gekennzeichnet,**
**dass** er als Plattenverteiler ausgebildet ist, der als Träger eine Bodenplatte (4) und einen Rahmen (6) aufweist und durch den Rahmen (6) die Luftverteilerfolie (8) eingespannt ist, wobei vorzugsweise weiterhin über die Luftverteilerfolie (8) Haltestreben (18) geführt sind und ein Anschluss (16) zur Zuführung von Luft ausgebildet ist.

9. Luftverteiler (2) nach einem der vorhergehenden Ansprüche,
**dadurch gekennzeichnet,**
**dass** die Luftverteilerfolie (2) getempert ist.

10. Luftverteilerfolie (8) für einen Luftverteiler (2) nach einem der vorhergehenden Ansprüche, die aus Kunststoff besteht und in die zur feinblasigen Abgabe von Luft an ein Wasservolumen eine Perforierung mit einzelnen, selbst verschließenden Luftdurchtrittsöffnungen (10) eingebracht ist,
**dadurch gekennzeichnet,**
**dass** die Luftverteilerfolie (2) als eine kaschierte Folie mit zumindest drei Folienlagen jeweils aus der gleichen Kunststoffart ausgebildet ist und in die kaschierte Folie aus den zumindest drei Folienlagen die Perforierung eingebracht ist, wobei die einzelnen Folienlagen eine abwasserseitige Funktionsschicht (20), eine hierzu verschiedene elastische Dichtschicht (24) sowie eine Trägerschicht (22) mit im Vergleich zu der Dichtschicht (24) geringeren Elastizität ausbilden und wobei in die Funktionsschicht (20) Substanzen (28) mit funktioneller Wirkung integriert sind oder die Funktionsschicht (20) eine hydrophile Oberfläche ausbildet und wobei durch die Dichtschicht (24) die selbst verschließende Eigenschaft der Luftdurchtrittsöffnungen (10) gewährleistet ist.

11. Verfahren zum Herstellen einer Luftverteilerfolie (8) nach dem vorhergehenden Anspruch,
**dadurch gekennzeichnet,**
**dass** sie in einem Extrusionsvorgang hergestellt wird, wobei die Funktionsschicht (20) mit einer gewünschten Oberflächenstrukturierung ausgebildet wird und hierzu über eine Walze geführt wird, wobei zwischen der Funktionsschicht und der Walze eine Trennlage zwischengelegt ist, über die die gewünschte Oberflächenstrukturierung der Funktionsschicht (20) eingestellt wird und wobei auf weitere Trennmittel bevorzugt verzichtet ist.

## Claims

1. Air distributor (2) for aerating a water volume, in particular for aerating wastewater in a sewage basin, which has a support (4, 6) and an air distributor film (8) composed of plastic which is fastened on said support and into which, for the purpose of delivering air in fine bubbles to the water volume, a perforation with individual, self-closing air passage openings (10) is introduced, **characterized**
**in that** the air distributor film (8) is in the form of a laminated film with at least three film layers, each composed of the same type of plastic, and the perforation is introduced into the laminated film composed of the at least three film layers, wherein the individual film layers form a wastewater-side function layer (20), an elastic sealing layer (24) which differs from said function layer and a support layer (22) which has a lower elasticity in comparison with the sealing layer (24), and wherein substances (28) with a functional effect are integrated into the function layer (20) or the function layer (20) forms a hydrophilic surface (12), and wherein the self-closing property of the air passage openings (10) is ensured by the sealing layer (24).

2. Air distributor (2) according to the preceding claim,
**characterized**
**in that** the function layer (20) is hydrophilic and has a water-absorption capacity.

3. Air distributor (2) according to one of the preceding claims,
**characterized**
**in that** the function layer (20) has a structured surface.

4. Air distributor (2) according to one of the preceding claims,
**characterized**
**in that** the function layer (20) has an antibacterial effect and, for this purpose, a substance (28) with an antibacterial effect is embedded into the function layer (20).

5. Air distributor (2) according to one of the preceding claims,
**characterized**
**in that** metal or metal compounds, in particular silver or silver compounds, are integrated into the function layer (20).

6. Air distributor (2) according to one of the preceding claims,
**characterized**
**in that** the support layer (22) has a Shore A hardness in the range of 85 to 95, and the sealing layer (24) has a Shore A hardness in the range of 75 to 85.

7. Air distributor (2) according to one of the preceding claims,
**characterized**
**in that** the individual layers (20, 22, 24) consist of a polyurethane.

8. Air distributor (2) according to one of the preceding claims,
**characterized**
**in that** said distributor is in the form of a plate distributor, which has, as a support, a bottom plate (4) and a frame (6), and the air distributor film (8) is clamped by the frame (6), wherein it is preferably furthermore the case that retaining struts (18) are guided over the air distributor film (8) and a connection (16) for the feeding of air is formed.

9. Air distributor (2) according to one of the preceding claims
**characterized**
**in that** the air distributor film (2) has been heat-treated.

10. Air distributor film (8) for an air distributor (2) according to one of the preceding claims, which consists of plastic and into which, for the purpose of delivering air in fine bubbles to a water volume, a perforation with individual, self-closing air passage openings (10) is introduced,
**characterized**
**in that** the air distributor film (2) is in the form of a laminated film with at least three film layers, each composed of the same type of plastic, and the perforation is introduced into the laminated film composed of the at least three film layers, wherein the individual film layers form a wastewater-side function layer (20), an elastic sealing layer (24) which differs from said function layer and a support layer (22) which has a lower elasticity in comparison with the sealing layer (24), and wherein substances (28) with a functional effect are integrated into the function layer (20) or the function layer (20) forms a hydrophilic surface, and wherein the self-closing property of the air passage openings (10) is ensured by the sealing layer (24).

11. Method for producing an air distributor film (8) according to the preceding claim,
**characterized**
**in that** said film is produced in an extrusion process, wherein the function layer (20) is formed with a desired surface structuring and, for this purpose, is guided over a roller, wherein interposed between the function layer and the roller is a separating layer via which the desired surface structuring of the function layer (20) is set, and wherein further separating means are preferably dispensed with.

## Revendications

1. Répartiteur d'air (2) servant à aérer un volume d'eau, en particulier pour aérer des eaux usées dans un bassin de décantation, qui présente un support (4, 6) et un film répartiteur d'air (8) en matière plastique fixé à celui-ci, dans lequel une perforation destinée à la délivrance de fines bulles d'air dans le volume d'eau est pratiquée avec des orifices de passage d'air individuels se fermant automatiquement (10), **caractérisé en ce que** le film répartiteur d'air (8) est formé par un film stratifié comportant au moins trois couches de film chacune constituée du même type de matière plastique et la perforation est pratiquée dans le film stratifié constitué desdites au moins trois couches de film, dans lequel les couches de film individuelles forment une couche fonctionnelle (20) du côté des eaux usées, une couche d'étanchéité élastique (24) différente de celle-ci ainsi qu'une couche de support (22) présentant une élasticité moins élevée par comparaison avec la couche d'étanchéité (24), et dans lequel des substances (28) avec une action fonctionnelle sont intégrées dans la couche fonctionnelle (20) ou la couche fonctionnelle (20) forme une surface hydrophile (12) et dans lequel la propriété de fermeture automatique des orifices de passage d'air (10) est garantie par la couche d'étanchéité (24).

2. Répartiteur d'air (2) selon la revendication précédente, **caractérisé en ce que** la couche fonctionnelle (20) est hydrophile et présente un pouvoir de rétention d'eau.

3. Répartiteur d'air (2) selon l'une quelconque des revendications précédentes, **caractérisé en ce que** la couche fonctionnelle (20) présente une surface structurée.

4. Répartiteur d'air (2) selon l'une quelconque des revendications précédentes, **caractérisé en ce que** la couche fonctionnelle (20) a une action antibactérienne et une substance (28) avec une action antibactérienne est incorporée à cet effet dans la couche fonctionnelle (20) .

5. Répartiteur d'air (2) selon l'une quelconque des revendications précédentes, **caractérisé en ce que** des métaux ou des composés métalliques sont intégrés dans la couche fonctionnelle (20), en particulier de l'argent ou des composés d'argent.

6. Répartiteur d'air (2) selon l'une quelconque des revendications précédentes, **caractérisé en ce que** la couche de support (22) présente une dureté Shore A comprise dans la plage de 85 à 95 et la couche d'étanchéité (24) présente une dureté Shore A comprise dans la plage de 75 à 85.

7. Répartiteur d'air (2) selon l'une quelconque des revendications précédentes, **caractérisé en ce que** les couches individuelles (20, 22, 24) sont constituées d'un polyuréthane.

8. Répartiteur d'air (2) selon l'une quelconque des revendications précédentes, **caractérisé en ce qu'**il est formé par un répartiteur à plateau, qui présente comme support un plateau de fond (4) et un cadre (6) et le film répartiteur d'air (8) est tendu par le cadre (6), dans lequel des entretoises de maintien (18) sont de préférence menées sur le film répartiteur d'air (8) et il est prévu un raccord (16) pour la fourniture d'air.

9. Répartiteur d'air (2) selon l'une quelconque des revendications précédentes, **caractérisé en ce que** le film répartiteur d'air (2) est recuit.

10. Film répartiteur d'air (8) pour un répartiteur d'air (2) selon l'une quelconque des revendications précédentes, qui se compose de matière plastique et dans lequel une perforation destinée à la délivrance de fines bulles d'air dans un volume d'eau est pratiquée avec des orifices de passage d'air individuels se fermant automatiquement (10), **caractérisé en ce que** le film répartiteur d'air (2) est formé par un film stratifié comportant au moins trois couches de film chacune constituée du même type de matière plastique et la perforation est pratiquée dans le film stratifié constitué desdites au moins trois couches de film, dans lequel les couches de film individuelles forment une couche fonctionnelle (20) du côté des eaux usées, une couche d'étanchéité élastique (24) différente de celle-ci ainsi qu'une couche de support (22) présentant une élasticité moins élevée par comparaison avec la couche d'étanchéité (24), et dans lequel des substances (28) avec une action fonctionnelle sont intégrées dans la couche fonctionnelle (20) ou la couche fonctionnelle (20) forme une surface hydrophile et dans lequel la propriété de fermeture automatique des orifices de passage d'air (10) est garantie par la couche d'étanchéité (24).

11. Procédé de fabrication d'un film répartiteur d'air (8) selon la revendication précédente, **caractérisé en ce qu'**on le fabrique par une opération d'extrusion, dans lequel on forme la couche fonctionnelle (20) avec une structuration de surface désirée et on la conduit à cet effet sur un rouleau, dans lequel une couche de séparation est intercalée entre la couche fonctionnelle et le rouleau, au moyen de laquelle on règle la structuration de surface désirée de la couche fonctionnelle (20) et dans lequel on renonce de préférence à d'autres moyens de séparation.
